# EUROPEAN PATENT SPECIFICATION

(11) **EP 3 330 517 B1**
(45) Date of publication and mention of the grant of the patent: **27.01.2021**
(21) Application number: 17205087.4
(22) Date of filing: 04.12.2017
(51) Int. Cl.: F02C 7/18, F02C 7/36

(54) **GAS TURBINE ENGINE WITH INTERCOOLED COOLING AIR AND CONTROLLED BOOST COMPRESSOR**
GASTURBINENMOTOR MIT ZWISCHENGEKÜHLTER KÜHLLUFT UND GESTEUERTEM BOOST-VERDICHTER
MOTEUR À TURBINE À GAZ À AIR DE REFROIDISSEMENT REFROIDI ET COMPRESSEUR À SURPRESSION RÉGULÉ

(30) Priority: 05.12.2016 US 201615368726
(43) Date of publication of application: 06.06.2018
(60) Divisional application: 19173910.1
(73) Proprietor: United Technologies Corporation, Farmington, CT 06032 (US)
(72) Inventor: SNAPE, Nathan, Tolland, CT Connecticut 06084 (US); STAUBACH, Joseph Brent, Colchester, CT Connecticut 06415 (US)
(74) Representative: Dehns

(56) References cited:
- EP-A1- 3 085 924
- EP-A1- 3 109 437
- EP-A1- 3 287 623
- EP-A1- 3 318 743
- US-A- 5 452 573

## Description

### BACKGROUND OF THE INVENTION

This application relates to a gas turbine engine wherein cooling air passes through a boost compressor to be delivered to a turbine section for cooling.

Gas turbine engines are known and typically include a fan delivering air into a bypass duct as propulsion air and into a compressor as core air. The air is compressed in the compressor and delivered into a combustor where it is mixed with fuel and ignited. Products of this combustion pass downstream over turbine rotors driving them to rotate. The turbine rotors, in turn, drive the compressor and fan rotor.

As known, the turbine components are exposed to very high temperatures. As such, it is known to deliver cooling air to the turbine.

Historically, the fan rotor rotated as one with a fan drive turbine. However, more recently, a gear reduction is placed between the fan rotor and the fan drive turbine. With this change, the fan may rotate at slower speeds than the fan drive turbine. This allows a designer to increase the speed of the fan drive turbine. This increase results in higher temperatures in the turbine section.

The higher temperatures raise cooling challenges. The higher temperatures also result in higher pressures at an upstream end of the turbine section. This is where one branch of the cooling air is typically delivered. As such, the cooling air must be at a sufficiently high pressure that it can move into this environment.

Historically, air from near a downstream end of the compressor section has been tapped to provide cooling air. However, with the move to a geared gas turbine engine, the efficient use of all air delivered into the core engine becomes more important. As such, utilizing air which has already been fully compressed is undesirable.

Recently, it has been proposed to tap the cooling air from a location upstream of the downstream most location in the compressor. This air is then passed through a boost compressor, which increases its pressure such that it now can move into the turbine section.

US 5,452,573 A discloses a prior art gas turbine engine as set forth in the preamble of claim 1.

### SUMMARY OF THE INVENTION

From a first aspect, the invention provides a gas turbine engine as recited in claim 1.

In an embodiment according to the above, the heat exchanger is in a bypass duct and cooled by bypass air from a fan rotor.

In a further embodiment according to any of the previous embodiments, a fan rotor is included and the fan rotor is driven by a fan drive turbine in the turbine section through a gear reduction.

In a further embodiment according to any of the previous embodiments, there are two of the heat exchangers, with a first heat exchanger between the cooling air tap and the boost compressor and a second heat exchanger downstream of the boost compressor.

In a further embodiment according to any of the previous embodiments, the heat exchangers are in a bypass duct and cooled by bypass air from a fan rotor.

In a further embodiment according to any of the previous embodiments, the boost compressor is controlled by the provision of a controlled tap downstream of the cooling air tap, and also upstream from the downstream most end, and a control controlling the flow of air from the controlled tap to the at least one heat exchanger.

In a further embodiment according to any of the previous embodiments, the cooling air tap passing through a cooling air tap valve to the at least one heat exchanger.

In a further embodiment according to any of the previous embodiments, the controlled tap communicates to a line to mix with air from the cooling air tap , and downstream of the cooling air tap valve.

In a further embodiment according to any of the previous embodiments, the cooling air tap valve is a check valve.

In a further embodiment according to any of the previous embodiments, a valve controls or modulates the pressure of the air passing to the at least one boost compressor.

In a further embodiment according to any of the previous embodiments, the boost compressor is provided with a controllable output.

In a further embodiment according to any of the previous embodiments, the boost compressor is provided with a variable area inlet.

In a further embodiment according to any of the previous embodiments, the variable area inlet includes the ability to adjust at least one of a vane and throat geometry to change the volume of air passing to the boost compressor.

In a further embodiment according to any of the previous embodiments, there is a controlled and variable mid-compression point tap in the boost compressor.

In a further embodiment according to any of the previous embodiments, the control for the boost compressor includes a variable area diffuser at a downstream end of the boost compressor.

In a further embodiment according to any of the previous embodiments, a take-off shaft driven by a turbine which drives at least a portion of the compressor section drives a gearbox to, in turn, drive the boost compressor.

In a further embodiment according to any of the previous embodiments, at least one of a transmission or differential is positioned between the gearbox and the boost compressor to control the speed of the boost compressor.

In a further embodiment according to any of the previous embodiments, at least one of the transmission or differential is passive and maintains a speed band for the boost compressor.

In a further embodiment according to any of the previous embodiments, at least one of a transmission or differential is controlled by a control to achieve a desired speed for the boost compressor.

These and other features may be best understood from the following drawings and specification.

### BRIEF DESCRIPTION OF THE DRAWINGS

Figure 1 schematically shows a gas turbine engine.
Figure 2 schematically shows a first embodiment.
Figure 3 schematically shows a second embodiment.
Figure 4 schematically shows a third embodiment.

### DETAILED DESCRIPTION

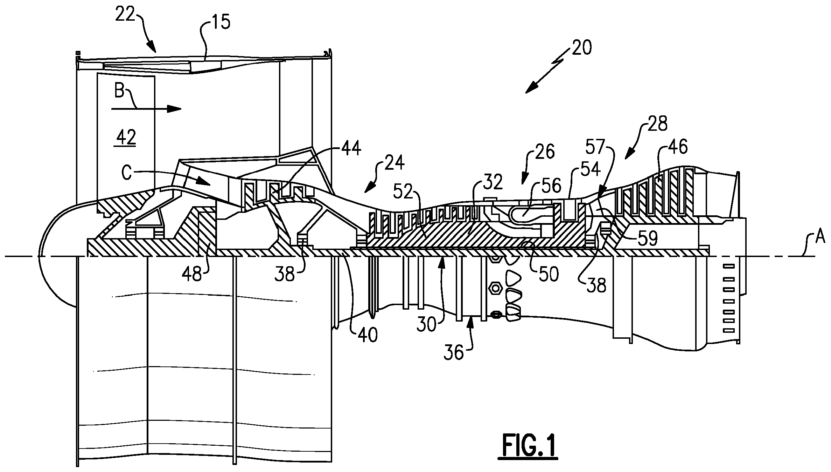

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

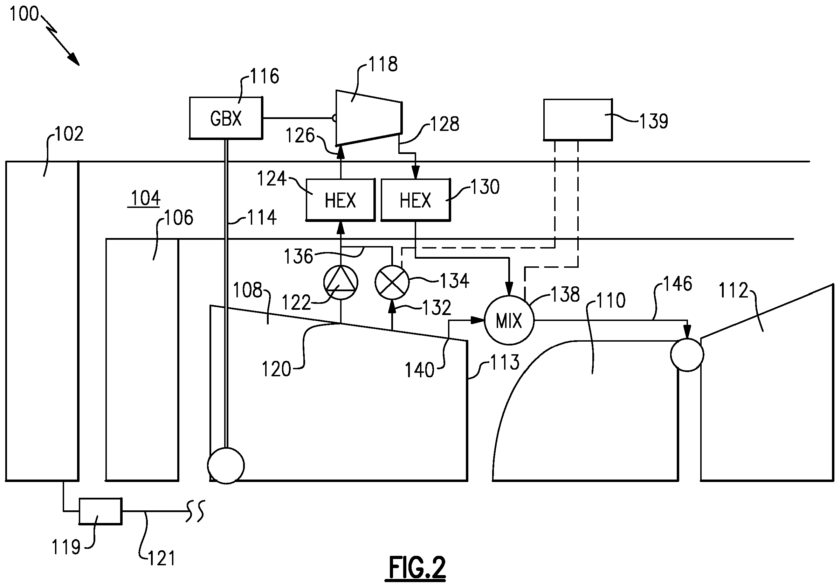

Gas turbine engine 100 is illustrated in Figure 2. A fan 102 delivers air into a bypass duct 104 as propulsion air. The fan 102 also delivers air to a low pressure compressor 106. The air then passes into a high pressure compressor 108. A tap 140 is shown in the high pressure compressor adjacent a downstream most end 113 of the compressor. Another tap 120 is shown at a location upstream of the downstream most end 113. Air compressed by the compressor 108 passes into a combustor 110. The air is mixed with fuel and ignited and products of this combustion pass over a high pressure turbine 112. In this embodiment, there will typically be at least a second turbine stage. In some embodiments, there may be a third turbine stage which drives the fan 102. A gear reduction 119 is shown between a shaft 121 driven by a fan drive turbine (which may be the second turbine or the third turbine, if one is included).

Air from the tap 120 is utilized as cooling air. It passes through a valve 122 to a heat exchanger 124. The air in the heat exchanger 124 is cooled by the bypass air in duct 104. Of course, other locations for the heat exchanger may be selected. Downstream of the heat exchanger 124 air passes through a boost compressor 118 through line 126. The boost compressor 118 is driven by an accessory driveshaft or takeoff shaft 114 through a gearbox 116. Shaft 114 may be driven by the high pressure turbine 112. Also, while bypass air is used to cool the heat exchanger, other fluids, such as fuel, may cool the heat exchanger.

Air downstream of the boost compressor 118 passes through a heat exchanger 130 through line 128, and then to a mixing chamber 138. It should be understood that while two heat exchangers are illustrated, only one heat exchanger may be needed. In the mixing chamber 138, air from the downstream location 140 is mixed with the air from the location 120 to arrive at a desired mix of temperature and pressure to be delivered at line 146 to cool the high pressure turbine 112.

As an example, at lower power operation, more air from the downstream most location 140 may be utilized with limited disadvantage to efficiency. The mixing chamber 138 may be a passive orifice feature. As long as the pressure downstream of the boost compressor is higher than the air from location 140, the boost compressor air will flow for cooling. Air from the tap 140 will make up any difference in the required flow volume. Alternatively, a control 139 may control the mixing chamber 138. Control 139 may be a standalone control or may be part of a full authority digital electronic controller (FADEC).

In the Figure 2 embodiment, the mixing chamber 138 does provide the ability to tailor the air being delivered to the turbine section 112, somewhat. Still, there may be times when demand for the air drops and there could be parasitic losses. In addition, there may be instances where it would be desirable to assist the boost compressor 118 in matching the operation of the compressors 106 and 108 over a larger range of operational conditions. Further, it may be desirable to provide variability in the intercooled cooling air system to match other aircraft system needs. As can be seen, the valve 122 is a check valve and thus provides a relatively controlled pressure to the boost compressor 118. However, a second tap 132 passes through a controlled valve 134, which may also be controlled by control 139, and into a line 136 to mix with the air from tap 120. By controlling the valve 134, the demand on the boost compressor 118 can be controlled. That is, should it be desirable to reduce the demand on the boost compressor 118 more of the higher pressure air from tap 132, from a location intermediate that of taps 120 and 140 may be utilized. Further, if the air is passing from tap 132 to line 136, that could create a higher pressure downstream of the check valve 122, thus limiting the flow from the tap 120. A worker of ordinary skill in the art would recognize when to actuate the valve 134 to achieve the desired controls.

The above embodiment with the valve 134 being used to control, if not block, flow downstream of the check valve 122 is one way. A separate embodiment might have a valve 134 which is able to modulate the pressure, such that a desired pressure can be delivered to the boost compressor. Both embodiments achieve a desired pressure head heading into the boost compressor.

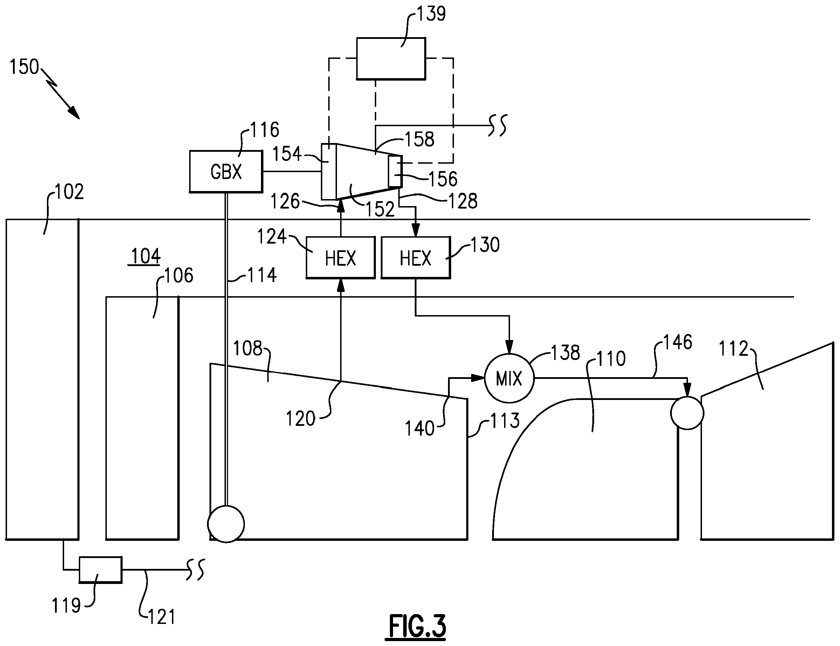

Figure 3 shows another embodiment 150 wherein a boost compressor 152 is provided with several ways to provide variability. As an example, a variable area inlet or vapor core 154 may be positioned on a suction side of the compressor 152. This can allow adjustment of a vane or throat quantity to change how much air passes to the compressor 152. In addition, a variable area diffuser 156 may be positioned on a downstream end. Again, this can be opened to limit the impact of the compressor 152 and reduce downstream pressures.

The control 139 may operate here to match conditions with the system. A worker of ordinary care and skill in the art would recognize the various conditions that might desirably indicate a need for controlling operation of the boost compressor.

These embodiments control both inlet pressure head and outlet pressure.

As shown at 158, there is an optional variable tap at a mid-compression point in the boost compressor 152. Tap 158 may limit the volume of air passing to the heat exchanger 130. Again, the control 139 will control operation of the tap through a valve or other means to achieve a desired and controlled output.

Further, a plurality of taps may be utilized such that desired bleed pressures can be achieved dependent on output needs.

It should be understood that three types of control of Figure 2 could be used separately, or in combination.

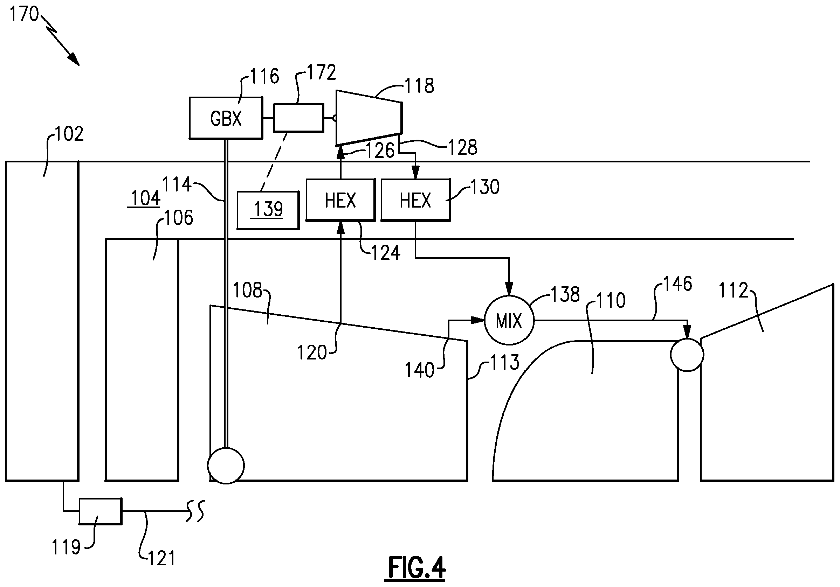

Figure 4 shows yet another embodiment 170. Here, a transmission or differential 172 is positioned between the gearbox 116 and boost compressor 118. This may be a passive control that ensures the boost compressor 118 operates at a fixed speed no matter the input speed. Alternatively, the control 139 could control the transmission or differential 172 to achieve varying speeds for the boost compressor 118.

The passive embodiment could be utilized to keep the boost compressor within a limited speed band, rather than a "fixed speed." The controlled embodiment can be utilized to achieve a variety of speed bands.

Here again, a worker of ordinary skill in this art would recognize what conditions might indicate a need to control the boost compressor operation.

Although embodiments of this invention have been disclosed, a worker of ordinary skill in this art would recognize that certain modifications would come within the scope of this invention. For that reason, the following claims should be studied to determine the true scope and content of this invention.

## Claims

1. A gas turbine engine (100; 150; 170) comprising:
a compressor section (108) having a downstream most end (113) and a cooling air tap (120) at a location spaced upstream from said downstream most end (113), air from said cooling air tap (120) being passed through at least one boost compressor (118; 152) and at least one heat exchanger (124; 130), and then passed to a turbine section (112) to cool said turbine section (112), said boost compressor (118; 152) being controlled to provide a desired pressure to said turbine section (112);
**characterised by**:
further comprising a mixing chamber (138) that receives air downstream of said boost compressor (118; 152) and selectively receives air from a second location (140) which has been compressed by said compressor section (108) to a pressure higher than a pressure of said cooling air tap (120), wherein said mixing chamber (138) is configured to control a mixture of said airflow downstream of said boost compressor (118; 152), and said airflow from said second location (140) to selectively deliver a mixture of the airflows to said turbine section (112), wherein:
said boost compressor (118; 152) is controlled by a controlled tap (132) downstream of said cooling air tap (120), and also upstream from said downstream most end (113), wherein a control (139) is configured to control the flow of air from said controlled tap (132) to said at least one heat exchanger (124, 130);
said boost compressor (152) is provided with a controllable output (156), and said boost compressor (152) is provided with a variable area inlet (154), wherein said variable area inlet (154) includes the ability to adjust at least one of a vane and throat geometry to change the volume of air passing to said boost compressor (152); or
the engine further comprises a take-off shaft (114) driven by a turbine (112) which drives at least a portion of said compressor section (24) configured to drive a gearbox (116) to, in turn, drive said boost compressor (118, 152) and a transmission and/or differential (172) positioned between said gearbox (116) and said boost compressor (118) to control the speed of said boost compressor (118).

2. The gas turbine engine (100... 170) as set forth in claim 1, wherein said heat exchanger is in a bypass duct (104) and cooled by bypass air (B) from a fan rotor (42, 102).

3. The gas turbine engine (100... 170) as set forth in any preceding claim, further comprising a fan rotor (42; 102) driven by a fan drive turbine (46) in said turbine section (28) through a gear reduction (48; 119).

4. The gas turbine engine (100...170) as set forth in any preceding claim, wherein said at least one exchanger (124, 130) comprises a first heat exchanger (124) between said cooling air tap (120) and said boost compressor (118; 152) and a second heat exchanger (130) downstream of said boost compressor (118; 152).

5. The gas turbine engine (100... 170) as set forth in claim 4, wherein said heat exchangers (124, 130) are in a or the bypass duct (104) and cooled by bypass air (B) from a or the fan rotor (42, 102).

6. The gas turbine engine (100...170) as set forth in any preceding claim, wherein said boost compressor (118; 152) is controlled by a controlled tap (132) downstream of said cooling air tap (120), and also upstream from said downstream most end (113), wherein a control (139) is configured to control the flow of air from said controlled tap (132) to said at least one heat exchanger (124, 130).

7. The gas turbine engine (100...170) as set forth in claim 6, wherein said cooling air tap (120) passes through a cooling air tap valve (122) to said at least one heat exchanger (124; 130).

8. The gas turbine engine (100...170) as set forth in claim 7, wherein said controlled tap (132) communicates to a line (136) to mix with air from said cooling air tap (120), and downstream of said cooling air tap valve (122).

9. The gas turbine engine (100...170) as set forth in claim 8, wherein said cooling air tap valve (122) is a check valve (122).

10. The gas turbine engine (100... 170) as set forth in any preceding claim, further comprising a valve (122) that controls or modulates the pressure of the air passing to said at least one boost compressor (118; 152).

11. The gas turbine engine (150) as set forth in any preceding claim, wherein said boost compressor (152) is provided with a controllable output (156), and said boost compressor (152) is provided with a variable area inlet (154), wherein said variable area inlet (154) includes the ability to adjust at least one of a vane and throat geometry to change the volume of air passing to said boost compressor (152).

12. The gas turbine engine (150) as set forth in claim 11, further comprising a controlled and variable mid-compression point tap (158) in said boost compressor (152).

13. The gas turbine engine (150) as set forth in claim 11 or 12, wherein said control for said boost compressor (152) includes a variable area diffuser (156) at a downstream end of said boost compressor (152).

14. The gas turbine engine (100... 170) as set forth in any preceding claim, further comprising a take-off shaft (114) driven by a turbine (112) which drives at least a portion of said compressor section (24) configured to drive a gearbox (116) to, in turn, drive said boost compressor (118, 152).

15. The gas turbine engine (170) as set forth in claim 14, further comprising a transmission and/or differential (172) positioned between said gearbox (116) and said boost compressor (118) to control the speed of said boost compressor (118), optionally wherein said at least one of said transmission or differential (172):
is passive and maintains a speed band for said boost compressor (118); or
is controlled by a control to achieve a desired speed for said boost compressor (118).

## Patentansprüche

1. Gasturbinentriebwerk (100; 150; 170), umfassend:
einen Verdichterabschnitt (108), der ein am weitesten stromabwärtiges Ende (113) und eine Kühlluftfalle (120) an einer Stelle aufweist, die stromaufwärts von dem am weitesten stromabwärtigen Ende (113) beabstandet ist, wobei Luft aus der Kühlluftfalle (120) durch mindestens einen Zusatzverdichter (118; 152) und mindestens einen Wärmetauscher (124; 130) geleitet wird und dann zu einem Turbinenabschnitt (112) geleitet wird, um den Turbinenabschnitt (112) zu kühlen, wobei der Zusatzverdichter (118; 152) so gesteuert wird, dass er einen gewünschten Druck für den Turbinenabschnitt (112) bereitstellt;
**dadurch gekennzeichnet:**
**dass** es ferner eine Mischkammer (138) umfasst, die Luft stromabwärts des Zusatzverdichters (118; 152) aufnimmt und selektiv Luft von einer zweiten Stelle (140) aufnimmt, die von dem Verdichterabschnitt (108) auf einen Druck verdichtet wurde, der höher als ein Druck der Kühlluftfalle (120) ist, wobei die Mischkammer (138) so konfiguriert ist, dass sie eine Mischung des Luftstroms stromabwärts des Zusatzverdichters (118; 152) und des Luftstroms aus der zweiten Stelle (140) so steuert, dass sie selektiv eine Mischung der Luftströme zu dem Turbinenabschnitt (112) liefert, wobei:
der Zusatzverdichter (118; 152) durch eine gesteuerte Zapfstelle (132) stromabwärts der Kühlluftfalle (120) und auch stromaufwärts des am weitesten stromabwärtigen Endes (113) gesteuert wird, wobei eine Steuerung (139) so konfiguriert ist, dass sie den Luftstrom von der gesteuerten Zapfstelle (132) zu dem mindestens einen Wärmetauscher (124, 130) steuert;
der Zusatzverdichter (152) mit einem steuerbaren Ausgang (156) versehen ist, und der Zusatzverdichter (152) mit einem Einlass (154) mit variablem Querschnitt versehen ist, wobei der Einlass (154) mit variablem Querschnitt die Möglichkeit beinhaltet, mindestens eine aus einer Leitschaufel- und einer Halsstückgeometrie anzupassen, um das Luftvolumen zu ändern, das zu dem Zusatzverdichter (152) strömt; oder
das Triebwerk ferner eine Zapfwelle (114) umfasst, die von einer Turbine (112) angetrieben wird, die mindestens einen Teil des Verdichterabschnitts (24) antreibt, und die so konfiguriert ist, dass sie ein Getriebe (116) antreibt, um wiederum den Zusatzverdichter (118, 152) anzutreiben, und ein Übersetzungsgetriebe und/oder Differential (172) umfasst, das zwischen dem Getriebe (116) und dem Zusatzverdichter (118) angeordnet ist, um die Drehzahl des Zusatzverdichters (118) zu steuern.

2. Gasturbinentriebwerk (100...170) nach Anspruch 1, wobei sich der Wärmetauscher in einem Nebenstromkanal (104) befindet und durch Nebenstromluft (B) von einem Fanrotor (42, 102) gekühlt wird.

3. Gasturbinentriebwerk (100...170) nach einem der vorstehenden Ansprüche, ferner einen Fanrotor (42; 102) umfassend, der von einer Fanantriebsturbine (46) in dem Turbinenabschnitt (28) über eine Untersetzung (48; 119) angetrieben wird.

4. Gasturbinentriebwerk (100...170) nach einem der vorstehenden Ansprüche, wobei der mindestens eine Tauscher (124, 130) einen ersten Wärmetauscher (124) zwischen der Kühlluftfalle (120) und dem Zusatzverdichter (118; 152) und einen zweiten Wärmetauscher (130) stromabwärts des Zusatzverdichters (118; 152) umfasst.

5. Gasturbinentriebwerk (100...170) nach Anspruch 4, wobei sich die Wärmetauscher (124, 130) in einem oder dem Nebenstromkanal (104) befinden und durch Nebenstromluft (B) von einem oder dem Fanrotor (42, 102) gekühlt werden.

6. Gasturbinentriebwerk (100...170) nach einem der vorstehenden Ansprüche, wobei der Zusatzverdichter (118; 152) durch eine gesteuerte Zapfstelle (132) stromabwärts der Kühlluftfalle (120) und auch stromaufwärts des am weitesten stromabwärtigen Endes (113) gesteuert wird, wobei eine Steuerung (139) so konfiguriert ist, dass sie den Luftstrom von der gesteuerten Zapfstelle (132) zu dem mindestens einen Wärmetauscher (124, 130) steuert.

7. Gasturbinentriebwerk (100...170) nach Anspruch 6, wobei die Kühlluftfalle (120) durch ein Kühlluftfallenventil (122) zu dem mindestens einen Wärmetauscher (124; 130) strömt.

8. Gasturbinentriebwerk (100...170) nach Anspruch 7, wobei die gesteuerte Zapfstelle (132) mit einer Leitung (136) in Verbindung steht, um eine Mischung mit Luft aus der Kühlluftfalle (120) vorzunehmen, und stromabwärts des Kühlluftfallenventils (122) liegt.

9. Gasturbinentriebwerk (100...170) nach Anspruch 8, wobei das Kühlluftfallenventil (122) ein Rückschlagventil (122) ist.

10. Gasturbinentriebwerk (100...170) nach einem der vorstehenden Ansprüche, ferner ein Ventil (122) umfassend, das den Druck der Luft, die zu dem mindestens einen Zusatzverdichter (118; 152) strömt, steuert oder moduliert.

11. Gasturbinentriebwerk (150) nach einem der vorstehenden Ansprüche, wobei der Zusatzverdichter (152) mit einem steuerbaren Ausgang (156) versehen ist und der Zusatzverdichter (152) mit einem Einlass (154) mit variablem Querschnitt versehen ist, wobei der Einlass (154) mit variablem Querschnitt die Möglichkeit beinhaltet, mindestens eine aus einer Leitschaufel- und Halsstückgeometrie anzupassen, um das Luftvolumen zu ändern, das zu dem Zusatzverdichter (152) strömt.

12. Gasturbinentriebwerk (150) nach Anspruch 11, ferner eine gesteuerte und variable Zapfstelle (158) an der Stelle der mittleren Verdichtung in dem Zusatzverdichter (152) umfassend.

13. Gasturbinentriebwerk (150) nach Anspruch 11 oder 12, wobei die Steuerung für den Zusatzverdichter (152) einen Diffusor (156) mit variablem Querschnitt an einem stromabwärtigen Ende des Zusatzverdichters (152) beinhaltet.

14. Gasturbinentriebwerk (100...170) nach einem der vorstehenden Ansprüche, ferner eine Zapfwelle (114) umfassend, die von einer Turbine (112) angetrieben wird, die mindestens einen Teil des Verdichterabschnitts (24) antreibt, und die so konfiguriert ist, dass sie ein Getriebe (116) antreibt, um wiederum den Zusatzverdichter (118, 152) anzutreiben.

15. Gasturbinentriebwerk (170) nach Anspruch 14, ferner ein Übersetzungsgetriebe und/oder Differential (172) umfassend, das zwischen dem Getriebe (116) und dem Zusatzverdichter (118) angeordnet ist, um die Drehzahl des Zusatzverdichters (118) zu steuern, optional wobei das mindestens eine aus dem Übersetzungsgetriebe oder dem Differential (172):
passiv ist und ein Drehzahlband für den Zusatzverdichter (118) aufrechterhält; oder
von einer Steuerung gesteuert wird, um eine erwünschte Drehzahl für den Zusatzverdichter (118) zu erreichen.

## Revendications

1. Moteur à turbine à gaz (100 ; 150 ; 170) comprenant :
une section de compresseur (108) ayant une extrémité la plus en aval (113) et un robinet d'air de refroidissement (120) au niveau d'un emplacement espacé en amont de ladite extrémité la plus en aval (113), l'air provenant dudit robinet d'air de refroidissement (120) étant transmis à travers au moins un compresseur à surpression (118 ; 152) et au moins un échangeur de chaleur (124 ; 130), puis transmis à une section de turbine (112) pour refroidir ladite section de turbine (112), ledit compresseur à surpression (118 ; 152) étant commandé pour fournir une pression souhaitée à ladite section de turbine (112) ;
**caractérisé par** :
comprenant en outre une chambre de mélange (138) qui reçoit de l'air en aval dudit compresseur à surpression (118 ; 152) et reçoit sélectivement de l'air provenant d'un second emplacement (140) qui a été comprimé par ladite section de compresseur (108) à une pression supérieure à une pression dudit robinet d'air de refroidissement (120), dans lequel ladite chambre de mélange (138) est configurée pour commander un mélange dudit écoulement d'air en aval dudit compresseur à surpression (118 ; 152), et dudit écoulement d'air provenant dudit second emplacement (140) pour délivrer sélectivement un mélange des écoulements d'air vers ladite section de turbine (112), dans lequel :
ledit compresseur à surpression (118 ; 152) est commandé par un robinet commandé (132) en aval dudit robinet d'air de refroidissement (120), et également en amont de ladite extrémité la plus en aval (113), dans lequel une commande (139) est configurée pour commander l'écoulement d'air provenant dudit robinet commandé (132) vers ledit au moins un échangeur de chaleur (124, 130) ;
ledit compresseur à surpression (152) est pourvu d'une sortie pouvant être commandée (156), et ledit compresseur à surpression (152) est pourvu d'une entrée à zone variable (154), dans lequel ladite entrée à zone variable (154) comporte la capacité à ajuster au moins l'une d'une géométrie d'aube et de gorge pour changer le volume d'air passant vers ledit compresseur à surpression (152) ; ou
le moteur comprend en outre un arbre de prise (114) entraîné par une turbine (112) qui entraîne au moins une partie de ladite section de compresseur (24) configurée pour entraîner une boîte de vitesses (116) pour, à son tour, entraîner ledit compresseur à surpression (118, 152) et une transmission et/ou un différentiel (172) positionné(s) entre ladite boîte de vitesses (116) et ledit compresseur à surpression (118) pour commander la vitesse dudit compresseur à surpression (118).

2. Moteur à turbine à gaz (100...170) selon la revendication 1, dans lequel ledit échangeur de chaleur est dans un conduit de dérivation (104) et refroidi par l'air de dérivation (B) provenant d'un rotor de soufflante (42, 102).

3. Moteur à turbine à gaz (100...170) selon une quelconque revendication précédente, comprenant en outre un rotor de soufflante (42 ; 102) entraîné par une turbine d'entraînement de soufflante (46) dans ladite section de turbine (28) par l'intermédiaire d'une démultiplication (48 ; 119) .

4. Moteur à turbine à gaz (100...170) selon une quelconque revendication précédente, dans lequel ledit au moins un échangeur (124, 130) comprend un premier échangeur de chaleur (124) entre ledit robinet d'air de refroidissement (120) et ledit compresseur à surpression (118 ; 152) et un second échangeur de chaleur (130) en aval dudit compresseur à surpression (118 ; 152).

5. Moteur à turbine à gaz (100...170) selon la revendication 4, dans lequel lesdits échangeurs de chaleur (124, 130) sont dans un ou le conduit de dérivation (104) et refroidis par l'air de dérivation (B) provenant d'un ou du rotor de soufflante (42, 102).

6. Moteur à turbine à gaz (100...170) selon une quelconque revendication précédente, dans lequel ledit compresseur à surpression (118 ; 152) est commandé par un robinet commandé (132) en aval dudit robinet d'air de refroidissement (120), et également en amont de ladite extrémité la plus en aval (113), dans lequel une commande (139) est configurée pour commander l'écoulement d'air provenant dudit robinet commandé (132) vers ledit au moins un échangeur de chaleur (124, 130).

7. Moteur à turbine à gaz (100...170) selon la revendication 6, dans lequel ledit robinet d'air de refroidissement (120) passe à travers une vanne de robinet d'air de refroidissement (122) vers ledit au moins un échangeur de chaleur (124 ; 130).

8. Moteur à turbine à gaz (100...170) selon la revendication 7, dans lequel ledit robinet commandé (132) communique avec une conduite (136) pour se mélanger à l'air provenant dudit robinet d'air de refroidissement (120), et en aval de ladite vanne de robinet d'air de refroidissement (122) .

9. Moteur à turbine à gaz (100...170) selon la revendication 8, dans lequel ladite vanne de robinet d'air de refroidissement (122) est un clapet anti-retour (122).

10. Moteur à turbine à gaz (100...170) selon une quelconque revendication précédente, comprenant en outre une vanne (122) qui commande ou module la pression de l'air passant vers ledit au moins un compresseur à surpression (118 ; 152).

11. Moteur à turbine à gaz (150) selon une quelconque revendication précédente, dans lequel ledit compresseur à surpression (152) est pourvu d'une sortie pouvant être commandée (156), et ledit compresseur à surpression (152) est pourvu d'une entrée à zone variable (154), dans lequel ladite entrée à zone variable (154) comporte la capacité à ajuster au moins l'une d'une géométrie d'aube et de gorge pour changer le volume d'air passant vers ledit compresseur à surpression (152) .

12. Moteur à turbine à gaz (150) selon la revendication 11, comprenant en outre un robinet à point de compression intermédiaire commandé et variable (158) dans ledit compresseur à surpression (152).

13. Moteur à turbine à gaz (150) selon la revendication 11 ou 12, dans lequel ladite commande pour ledit compresseur à surpression (152) comporte un diffuseur à zone variable (156) au niveau d'une extrémité en aval dudit compresseur à surpression (152).

14. Moteur à turbine à gaz (100...170) selon une quelconque revendication précédente, comprenant en outre un arbre de prise (114) entraîné par une turbine (112) qui entraîne au moins une partie de ladite section de compresseur (24) configurée pour entraîner une boîte de vitesses (116) pour, à son tour, entraîner ledit compresseur à surpression (118, 152).

15. Moteur à turbine à gaz (170) selon la revendication 14, comprenant en outre une transmission et/ou un différentiel (172) positionné(s) entre ladite boîte de vitesses (116) et ledit compresseur à surpression (118) pour commander la vitesse dudit compresseur à surpression (118), éventuellement dans lequel ledit au moins un de ladite transmission ou dudit différentiel (172) :
est passif et maintient une bande de vitesse pour ledit compresseur à surpression (118) ; ou
est commandé par une commande pour atteindre une vitesse souhaitée pour ledit compresseur à surpression (118).
